# EUROPEAN PATENT APPLICATION

(11) **EP 3 239 614 A1**
(43) Date of publication of application: **01.11.2017**
(21) Application number: 17153469.6
(22) Date of filing: 27.01.2017
(51) Int. Cl.: F23R 3/36, F23L 7/00, F23N 5/10

(54) **SYSTEMS AND METHODS OF PREDICTING PHYSICAL PARAMETERS FOR A COMBUSTION FUEL SYSTEM**

(30) Priority: 01.02.2016 US 201615012376
(71) Applicant: General Electric Company, Schenectady, NY 12345 (US)
(72) Inventor: ZHANG, Hua, Greenville, SC South Carolina 29615 (US)
(74) Representative: Lee, Brenda

(57) **Abstract**

In one embodiment of the disclosure, a method (300) for predicting physical parameters of a combustion fuel system (100) includes causing water injection in at least one combustor. The water injection is associated with at least one time and performed during gaseous fuel operations or after liquid fuel operations. The method (300) includes measuring exhaust spread data associated with the water injection and allows correlating the exhaust spread data to at least one physical parameter associated with a nozzle (12) or a valve of the fuel system (100). The method (300) further includes storing the exhaust spread data, the at least one physical parameter, and the at least one time to a database. The method (300) further provides stored historical data from the database to an analytical model. The analytical model is operable to predict, based at least partially on the stored historical data, at least one future physical parameter associated with a future time.

## Description

### TECHNICAL FIELD

The disclosure relates to the art of turbomachines, and, more particularly, to systems and methods of predicting physical parameters for a combustion fuel system.

### BACKGROUND

Combustion fuel systems burn gaseous fuel (for example, natural gas). Some combustion fuel systems can burn gaseous fuel and liquid fuel, such as diesel. Typically, a dual fuel combustion system operates using the gaseous fuel, while the liquid fuel is used as a backup fuel when the gaseous fuel is not available due to, for example, issues with delivery of the gaseous fuel to the combustion fuel system.

A combustion chamber of the combustion fuel system can be configured to receive both the gaseous fuel and the liquid fuel. Use of liquid fuel may result in by-products or loss of material due to erosion/corrosion, which may degrade flow paths for delivering fuels in the combustor chamber and, as a result, decrease productivity and reliability of the combustion fuel system.

### SUMMARY OF THE DISCLOSURE

This disclosure relates to systems and methods of predicting physical parameters for a combustion fuel system. Certain embodiments of the disclosure can facilitate detecting failures related to fuel nozzles and mixing valves of the combustion fuel system. According to one embodiment of the disclosure, a method of predicting physical parameters for a fuel system includes causing water injection in at least one combustor. The water injection can be associated with at least one time. The method can include measuring exhaust temperature spread data associated with the water injection and correlating the exhaust spread data to at least one physical parameter associated with a nozzle or a valve of the fuel system. The method can further include storing the exhaust spread data, at least one physical parameter, and at least one time to a database. Historical data can be provided from the database to an analytical model. The analytical model can be operable to predict, based at least partially on the stored historical data, at least one future physical parameter associated with a future time. The method can predict changes in a productivity of the fuel system. Additionally, the method can issue, based at least partially on the prediction, a maintenance recommendation for the fuel system. Operational adjustments of the fuel system can be performed based at least partially on the prediction.

In some embodiments of the disclosure, at least one water injection is performed at a commissioning of the fuel system. In certain embodiments of the disclosure, the water injection can be performed via at least one pilot valve of at least one pilot nozzle of the fuel system. In some embodiments of the disclosure, the water injection is performed via at least one main valve or at least one main nozzle of the fuel system.

In some embodiments of the disclosure, physical parameters include a flow rate of at least one nozzle of the fuel system and a cross-section area of at least one valve of the fuel system.

In some embodiments of the disclosure, the water injection is performed while operating on a gas fuel. In certain embodiments, the water injection is performed after a liquid fuel operation.

In some embodiments of the disclosure, the analytical model is operable to provide guidelines or permissive for gas turbines operations, a variation of a fuel flow rate, a firing temperature, or an adjusted water purge duration of the fuel system.

In certain embodiments of the disclosure, the exhaust spread data is measured with a set of thermocouples disposed adjacent to an exhaust system associated with the combustor.

According to another embodiment of the disclosure, a system for predicting physical parameters of a combustion fuel system is provided. The system can include a combustor. The system can further include a processor communicatively coupled to a memory, with the memory storing instructions which, when executed by the processing circuit, perform certain operations. These operations can include causing at least one water injection in at least one combustor, the at least one water injection being associated with at least one time; measuring at least one exhaust spread data associated with the at least one water injection; correlating the at least one exhaust spread data with at least one physical parameter associated with at least one of a nozzle or a valve of the liquid fuel system; storing the at least one exhaust spread data, the at least one physical parameter, and the at least one time to a database; and providing stored data from the database to an analytical model, wherein the analytical model is operable to predict, based at least partially on the stored data, at least one future physical parameter associated with a future time.

Other embodiments, systems, methods, features, and aspects will become apparent from the following description taken in conjunction with the following drawings.

### BRIEF DESCRIPTION OF THE DRAWINGS

FIG. 1 is a block diagram illustrating an example combustion fuel system, according to some embodiments of the disclosure.
FIG. 2 is a block diagram illustrating an example system for predicting physical parameters of a combustion fuel system, according to an embodiment of the disclosure.
FIG. 3 is flow chart illustrating an example method of predicting physical parameters of a combustion fuel system, according to an embodiment of the disclosure.
FIG. 4 is a block diagram illustrating an example controller for controlling a combustion fuel system, in accordance with an embodiment of the disclosure.

### DETAILED DESCRIPTION

The following detailed description includes references to the accompanying drawings, which form part of the detailed description. The drawings depict illustrations, in accordance with example embodiments. These example embodiments, which are also referred to herein as "examples," are described in enough detail to enable those skilled in the art to practice the present subject matter. The example embodiments may be combined, other embodiments may be utilized, or structural, logical, and electrical changes may be made, without departing from the scope of the claimed subject matter. The following detailed description is, therefore, not to be taken in a limiting sense, and the scope is defined by the appended claims and their equivalents.

Certain embodiments of the disclosure can include systems and methods of predicting physical parameters of a combustion fuel system. The disclosed systems and methods may provide diagnostics of fuel nozzles and mixing valves of the combustion fuel system, and facilitate issuing a maintenance recommendation for the combustion fuel system.

In some example embodiments of the disclosure, a processor may cause water injection in at least one combustor. The water injection can be associated with at least one time. The processor may measure exhaust spread data associated with the water injection and correlate the exhaust spread data to at least one physical parameter associated with a nozzle or a valve of a combustion fuel system. The processor may also store the exhaust spread data, at least one physical parameter, and at least one time to a database. The processor may provide stored historical data from the database to an analytical model. The analytical model can be operable to predict, based at least partially on the stored historical data, at least one future physical parameter associated with a future time.

Technical effects of certain embodiments of the disclosure may include performing a diagnostic of a combustion fuel system without disassembling the combustion fuel system. Further technical effects of certain embodiments of the disclosure may allow increasing the probability of detecting hardware failures related to performance of fuel nozzles and mixing valves of the combustion fuel system. Yet further technical effects of certain embodiments of the disclosure provide information concerning health of the combustion fuel system and allow a reduction in combustion related trips, forced outage time, and unplanned costs.

The following provides a detailed description of various example embodiments related to systems and methods of predicting physical parameters for a combustion fuel system.

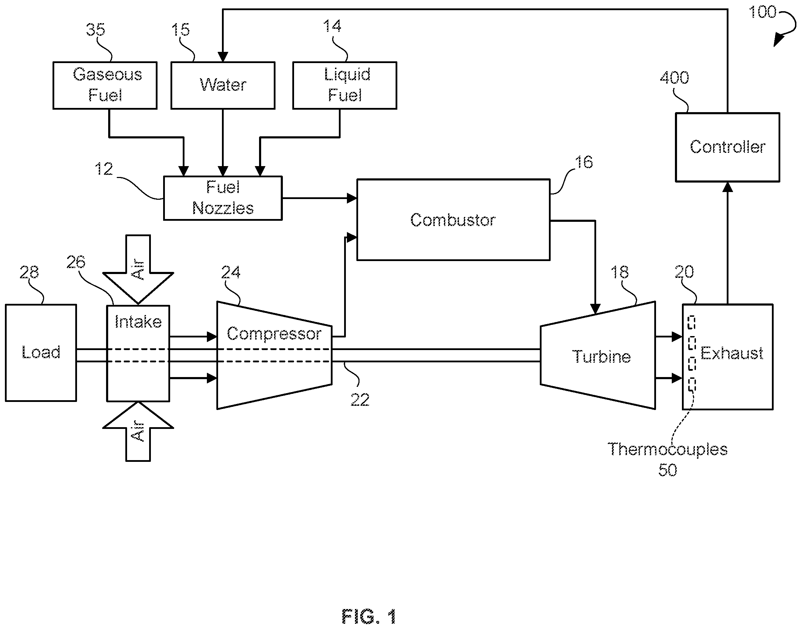

Turning now to the drawings, FIG. 1 is a block diagram illustrating a combustion fuel system 100 (also referred herein as a liquid fuel system or a fuel system), in accordance with an example embodiment of the disclosure. The system 100 may use liquid or gaseous fuel, such as natural gas and/or a synthetic gas. As depicted, one or more fuel nozzles 12 intake a liquid fuel supply 14 and a gaseous fuel supply 35. For example, one or more fuel nozzles 12 may be used to intake liquid fuel and one or more other fuel nozzles 12 may be used to intake gaseous fuel. Some of the fuel nozzles are pilot nozzles and other fuel nozzles are main nozzles. In addition, the fuel nozzles 12 may intake a water supply 15. The system 100 mixes the liquid fuel with the water supply 15 upstream from and/or within the fuel nozzles 12. Mixing the liquid fuel with the water supply 15 may improve the efficiency of byproduct, e.g., NOx, suppression, thereby reducing production and exhaust of the byproducts from the system 100. Although shown schematically as being outside or separate from the combustor 16, the fuel nozzles 12 may be disposed inside the combustor 16. The fuel and water (when used), mixture combusts in a chamber within the combustor 16, thereby creating hot pressurized exhaust gases. The combustor 16 directs the exhaust gases through a turbine 18 toward an exhaust system 20. Exhaust system 20 may include a plurality of thermocouples 50. Although only one combustor 16 is shown in FIG. 1, in certain embodiments, a plurality of combustors 16 may be arranged circumferentially about the turbine 18. Each of the plurality of combustors 16 may include separate fuel nozzles 12. As the exhaust gases pass through the turbine 18, the gases force turbine blades to rotate a shaft 22 along an axis of the system 100. As illustrated, the shaft 22 is connected to various components of the system 100, including a compressor 24. The compressor 24 also includes blades coupled to the shaft 22. As the shaft 22 rotates, the blades within the compressor 24 also rotate, thereby compressing air from an air intake 26 through the compressor 24 and into the fuel nozzles 12 and/or combustor 16. The shaft 22 may also be connected to a load 28, which may be a vehicle or a stationary load, such as an electrical generator in a power plant. The load 28 may include any suitable device capable of being powered by the rotational output of system 100. The system 100 may further include a controller 400 that may be operatively connected to water supply 15. The controller 400 may also operatively receive exhaust spread data from thermocouples 50 in exhaust system 20.

During operations, performance of the combustion fuel system 100 and turbine 18 may degrade due to changes of parameters of fuel nozzles and mixing valves. The flow path in the fuel nozzles and the mixing valves can be changed due to corrosion, erosion, and fouling.

Solid materials can build up on inner surfaces of the fuel nozzles and mixing valves. The solid materials can be produced when liquid fuel (for example, diesel) is exposed to high temperature, so small portions of liquid fuel may become solid due to coking. Some solid materials remain inside fuel nozzles and mixing valves and therefore decrease the cross-section area of the fuel nozzles and mixing valves. Decreasing the cross-section areas of the fuel nozzles and mixing valves may result in a decreased fuel flow rate and, therefore, in decreased expected performance of the combustion fuel system thus the gas turbine.

Some residual of oil may build up when system 100 operates on liquid fuel. A water injection to the fuel nozzles can be used to clean up the built up solid materials from fuel nozzles and mixing valves. The water injection can be enabled each time after the turbine engine stops burning the liquid fuel and prior to starting to run on gaseous fuel. In some embodiments of the disclosure, the water injection can be enabled to liquid fuel nozzles during gaseous fuel operations. In certain embodiments of the disclosure, during injection of the water, an exhaust spread data can be recorded using, for example, thermocouples 50. The exhaust spread data recorded at different times of water injection can be further analyzed to track changes of physical parameters of fuel nozzles and mixing valves and predict the physical parameters of fuel nozzles and mixing valves in future time.

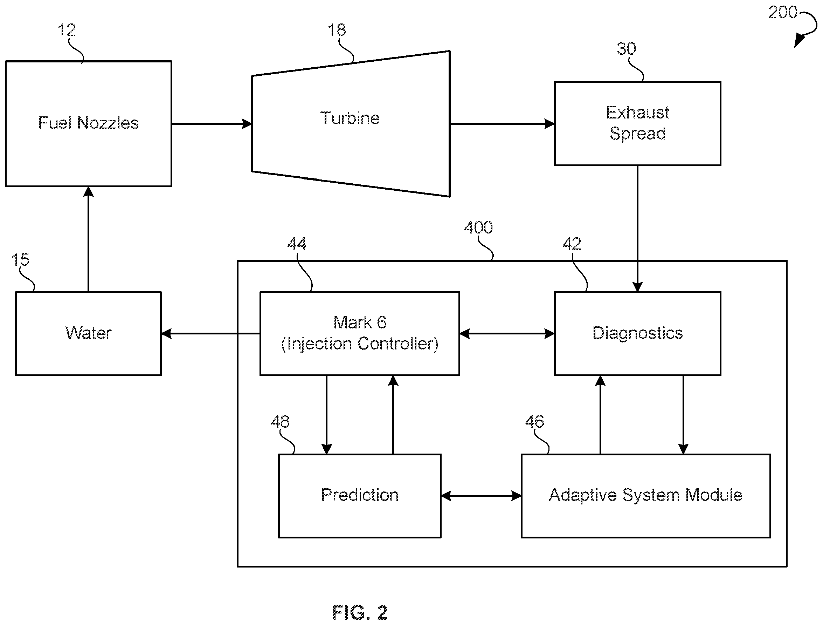

FIG. 2 is a block diagram illustrating an example system 200 for predicting physical parameters of a combustion fuel system, according to an example embodiment of the disclosure. The system 200 includes an exhaust spread module 30, a diagnostics module 42, an injection controller 44, a prediction module 48, and an adaptive system module 46. Some of the modules of the system 200 can be implemented as instructions stored in a memory and executed by a processor of controller 400.

In some embodiments of the disclosure, the exhaust spread module 30 is operable to read temperature data from thermocouples 50 during operations of turbine 18. For example, the exhaust spread module 30 may measure an exhaust spread data captured when water is injected in fuel nozzles 12. Thermocouples 50 can be arranged circumferentially on exhaust system 20 and can be correlated to particular locations of mixing valves and fuel nozzles. When combustion fuel system 100 bums gaseous fuel, the exhaust spread is generally of a uniform pattern. The injection of water during gas fuel operation forces the data in the exhaust spread to be more distinctive at different locations. By analyzing the exhaust spreads recorded during the water injections at different times, changes of temperature at a particular position in the exhaust spread can be tracked. The changes of exhaust spread at the particular position can be correlated to a particular mixing valve or a particular fuel nozzle. For example, if the temperature at the particular location in exhaust spread becomes higher over time with each next water injection, it may indicate that the cross-section area of a mixing valve located at the particular location decreases since a lesser amount of water is passing through the cross-section area of the mixing valve. Similarly, the change of the temperature at the particular location in exhaust spread can be correlated to a change of fuel flow rate for a particular fuel nozzle.

An initial exhaust spread can be recorded shortly after the combustion fuel system is commissioned. When the combustion fuel system is commissioned, initial physical parameters, such as flow numbers (sizes of the fuel nozzles) and flow rates are known from manufacturer. Therefore, initial exhaust spread may represent a signature of initial physical parameters of the fuel nozzles and the mixing valves. During following operations of the combustion fuel system, an exhaust temperature spread is recorded each time when enabling water injection in fuel nozzles. Changes in exhaust spreads recorded during water injections may indicate changes of physical parameters of the fuel nozzles and mixing valves from the initial physical parameters.

In some embodiments of the disclosure, diagnostics module 42 may store and analyze historical records containing exhaust spreads captured in response to water injections and times when the exhaust spread are captured. The diagnostic module 42 can also keep time records for fuel flow rates during both gaseous fuel operations and liquid fuel operations, and other physical parameters of the combustion fuel system. Based on the historical records, the diagnostics module 42 may report current state of physical parameters of fuel nozzles and mixing valves and issue recommendations regarding maintenance of the combustion fuel system.

In some embodiments of the disclosure, prediction module 48 may predict, based on the historical records, the productivity of a combustion fuel system at future times. For example, prediction module 48 may predict flow rates for a particular fuel nozzle and cross-section area of a particular mixing valve in a pre-determined time period. The prediction module 48 may issue warnings regarding the remaining lifetime for a particular fuel nozzle and a particular mixing valve.

In some embodiments of the disclosure, the prediction and diagnostics of physical parameters of a combustion fuel system may be based on adaptive system module 46. The adaptive system module 46 may include an analytical model. The analytical model may correlate the exhaust temperature spreads to physical parameters of a combustion fuel system, for example, to flow rates of fuel nozzles and cross-section areas of mixing valves. The analytical model can be further operable to provide guidelines or permissive for gas turbines operations, such as variation of fuel flow rate, or firing temperature, or an adjusted water purge duration of the combustion fuel system.

In some embodiments of the disclosure, the analytical model can predict the physical parameters of the combustion fuel system at a future time. In various embodiments, the analytical model may include a machine learning algorithm, an expert system, a neural network, an extrapolation model, and so forth.

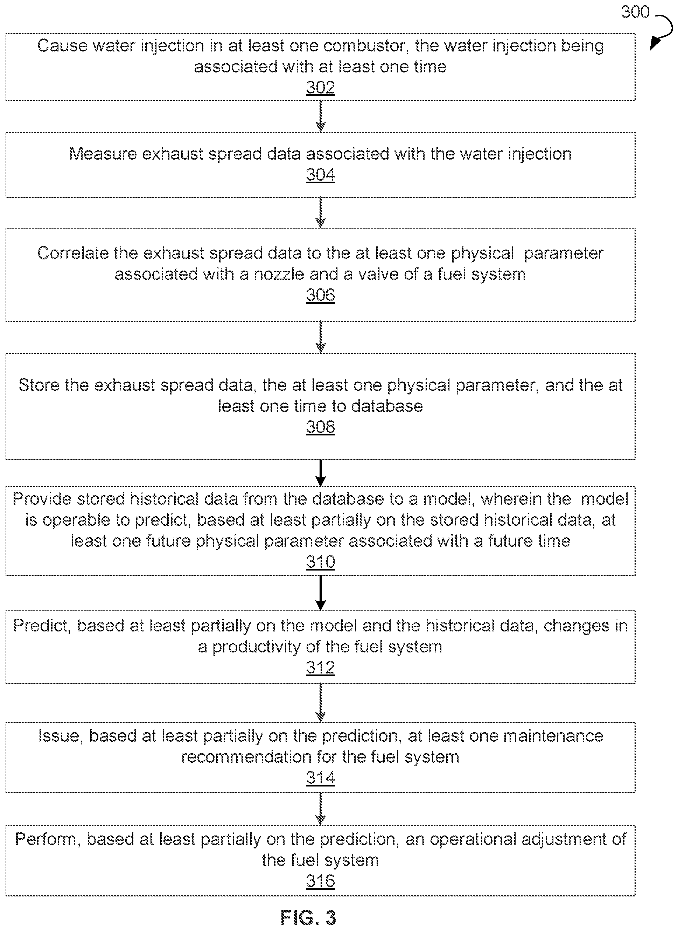

FIG. 3 is flow chart illustrating an example method 300 for predicting physical parameters of a combustion fuel system, according to an embodiment of the disclosure. The operations of the method 300 may be performed by system 200 for predicting physical parameters of a combustion fuel system. The operations of method 300 may be embedded in program instructions of controller 400. The method 300 may analyze exhaust temperature spread data captured during injection of water into combustor 16 to track changes in physical parameters of combustion fuel system over time.

In block 302, method 300 can commence with causing water injection in at least one combustor. The water injection is associated with at least one time. A first water injection is carried out at time of commissioning the fuel system.

In block 304, method 300 includes measuring exhaust spread data associated with the water injection.

In block 306, the exhaust spread data are correlated to at least one physical parameter associated with a nozzle or a valve of the fuel system. The nozzle can include a main liquid fuel nozzle and a pilot liquid fuel nozzle. Physical parameters may include a fuel rate of the nozzle and a cross-section area of the valve.

In block 308, the exhaust spread data, at least one physical parameter, and the at least one time are stored to a database.

In block 310, historical data from the database are provided to an analytical model. The analytical model is operable to predict, based at least partially on the stored historical data, at least one future physical parameter associated with a future time. The historical data may include exhaust temperature spreads captured during gaseous fuel operations. The historical data may further include exhaust temperature spreads captured during clean-up water injection after finishing liquid fuel operations.

In block 312, method 300 includes predicting, based on the analytical model and the historical data, changes in productivity of the fuel system.

In block 314, method 300 can allow issuing, based on the prediction, a maintenance recommendation for the fuel system.

In block 316, operational adjustment of the fuel system can performed based partially on the prediction.

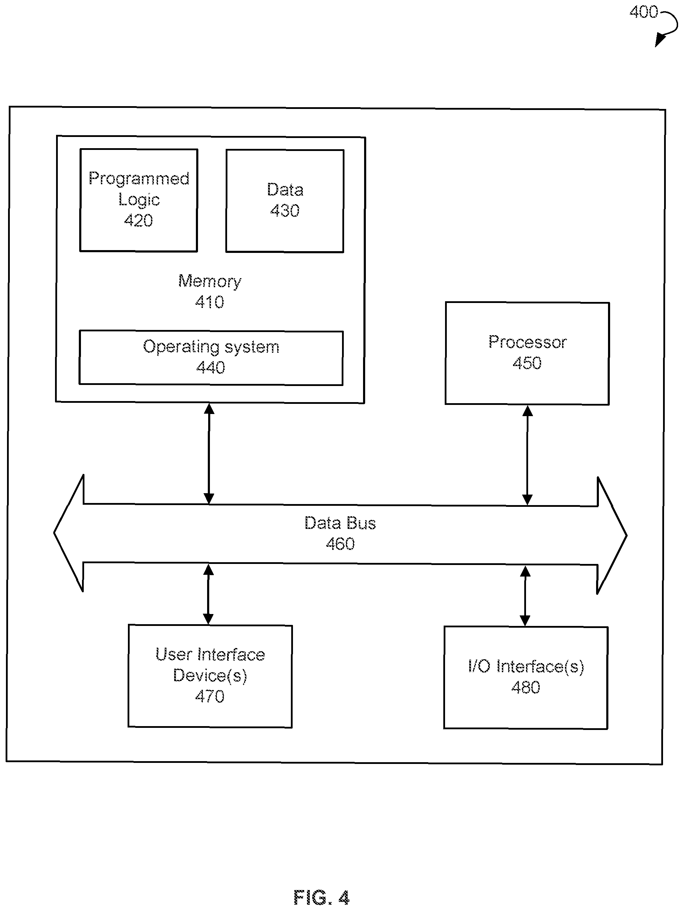

FIG. 4 depicts a block diagram illustrating an example controller 400, in accordance with an embodiment of the disclosure. More specifically, the elements of the controller 400 may be used to run a combustion fuel system under a plurality of operational conditions while within predetermined combustion operational boundaries, automatically collect operational data associated with the combustion fuel system while the combustion fuel system is running, store the operational data, generate a set of constants for one or more predetermined combustion transfer functions based on the operational data, and store the set of constants in the combustion control system to be used during the commissioning of the combustion fuel system. The controller 400 may include a memory 410 that stores programmed logic 420 (e.g., software) and may store data 430, such as operational data associated with the combustion fuel system, the set of constants, and the like. The memory 410 also may include an operating system 440.

A processor 450 may utilize the operating system 440 to execute the programmed logic 420, and in doing so, may also utilize the data 430. A data bus 460 may provide communication between the memory 410 and the processor 450. Users may interface with the controller 400 via at least one user interface device 470, such as a keyboard, mouse, control panel, or any other device capable of communicating data to and from the controller 400. The controller 400 may be in communication with the combustion fuel system while operating, as well as in communication with the combustion fuel system combustion control system offline while not operating, via an input/output (I/O) interface 480. Additionally, it should be appreciated that other external devices or multiple other combustion fuel systems or combustors may be in communication with the controller 400 via the I/O interface 480. In the illustrated embodiment of the disclosure, the controller 400 may be located remotely with respect to the turbine system; however, it may be co-located or even integrated with the turbine system. Further, the controller 400 and the programmed logic 420 implemented thereby may include software, hardware, firmware, or any combination thereof. It should also be appreciated that multiple controllers 400 may be used, whereby different features described herein may be executed on one or more different controllers 400.

References are made to block diagrams of systems, methods, apparatuses, and computer program products, according to example embodiments of the disclosure. It will be understood that at least some of the blocks of the block diagrams, and combinations of blocks in the block diagrams, may be implemented at least partially by computer program instructions. These computer program instructions may be loaded onto a general purpose computer, special purpose computer, special purpose hardware-based computer, or other programmable data processing apparatus to produce a machine, such that the instructions which execute on the computer or other programmable data processing apparatus create means for implementing the functionality of at least some of the blocks of the block diagrams, or combinations of blocks in the block diagrams discussed.

These computer program instructions may also be stored in a computer-readable memory that can direct a computer or other programmable data processing apparatus to function in a particular manner, such that the instructions stored in the computer-readable memory produce an article of manufacture including instruction means that implement the function specified in the block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the block or blocks.

One or more components of the systems and one or more elements of the methods described herein may be implemented through an application program running on an operating system of a computer. They also may be practiced with other computer system configurations, including hand-held devices, multiprocessor systems, microprocessor based or programmable consumer electronics, mini-computers, mainframe computers, and the like.

Application programs that are components of the systems and methods described herein may include routines, programs, components, data structures, and so forth that implement certain abstract data types and perform certain tasks or actions. In a distributed computing environment, the application program (in whole or in part) may be located in local memory or in other storage. In addition, or alternatively, the application program (in whole or in part) may be located in remote memory or in storage to allow for circumstances where tasks are performed by remote processing devices linked through a communications network.

Many modifications and other embodiments of the example descriptions set forth herein to which these descriptions pertain will come to mind having the benefit of the teachings presented in the foregoing descriptions and the associated drawings. Thus, it will be appreciated that the disclosure may be embodied in many forms and should not be limited to the example embodiments described above.

Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Various aspects and embodiments of the present invention are defined by the following numbered clauses:
1. A method of predicting performance of a fuel system, the method comprising:
   causing water injection in at least one combustor, the water injection being associated with at least one time;
   measuring exhaust spread data associated with the water injection;
   correlating the exhaust spread data to at least one physical parameter associated with a nozzle or a valve of the fuel system;
   storing the exhaust spread data, the at least one physical parameter, and the at least one time to a database; and
   providing stored historical data from the database to an analytical model, wherein the analytical model is operable to predict, based at least partially on the stored historical data, at least one future physical parameter associated with a future time.
2. The method of clause 1, wherein the at least one time is associated with commissioning of the fuel system.
3. The method of any preceding clause, when the water injection is performed via at least one pilot valve of at least one pilot nozzle of the fuel system.
4. The method of any preceding clause, wherein the water injection is performed via at least one main valve or at least one main nozzle of the fuel system.
5. The method of any preceding clause, wherein the at least one physical parameter includes at least a flow rate of at least one nozzle of the fuel system and a cross-section area of at least one valve of the fuel system.
6. The method of any preceding clause, wherein the water injection is performed during a gas fuel operation.
7. The method of any preceding clause, wherein the water injection is performed after a liquid fuel operation.
8. The method of any preceding clause, wherein the analytical model is further operable to provide guidelines or permissive for gas turbines operations, a variation in fuel flow rate, a firing temperature, or an adjusted water purge duration of the combustion fuel system.
9. The method of any preceding clause, further comprising performing, based at least partially on the analytical model, at least one of the following:
   predicting changes in a productivity of the fuel system;
   issuing, based at least partially on the prediction, at least one maintenance recommendation for the fuel system; or
   performing, based at least partially on the prediction, an operational adjustment of the fuel system.
10. The method of any preceding clause, wherein the exhaust spread data is measured with a set of thermocouples disposed adjacent to an exhaust system associated with the at least one combustor.
11. A system for predicting performance of a liquid fuel system, the system comprising:
   a processor;
   a memory communicatively coupled to the processor, the memory storing instructions which when executed by the processor perform operations comprising:
      causing at least one water injection in at least one combustor, the at least one water injection being associated with at least one time;
      measuring at least one exhaust spread data associated with the at least one water injection;
      correlating the at least one exhaust spread data with at least one physical parameter associated with at least one of a nozzle or a valve of the liquid fuel system;
      storing the at least one exhaust spread data, the at least one physical parameter, and the at least one time to a database; and
      providing stored data from the database to an analytical model, wherein the analytical model is operable to predict, based at least partially on the stored data, at least one future physical parameter associated with a future time.
12. The system of any preceding clause, wherein the at least one time is associated with commissioning of the liquid fuel system.
13. The method of any preceding clause, wherein the at least one water injection is performed via at least one pilot valve or at least one pilot nozzle of the liquid fuel system.
14. The system of any preceding clause, wherein the at least one water injection is performed via at least one main valve or at least one main nozzle of the liquid fuel system.
15. The system of any preceding clause, wherein the at least one physical parameter includes at least a flow rate of at least one nozzle of the liquid fuel system and a cross-section area of at least one valve of the liquid fuel system.
16. The system of any preceding clause, wherein the at least one water injection is performed during a gas fuel operation.
17. The system of any preceding clause, wherein the at least one water injection is performed after a liquid fuel operation.
18. The system of any preceding clause, wherein the analytical model is further operable to provide guidelines or permissive for gas turbines operations, a variation of a fuel flow rate, a firing temperature, or an adjusted water purge duration of the combustion fuel system.
19. The system of any preceding clause, further comprising performing, based on the analytical model, at least one of the following:
   predicting changes in a productivity of the liquid fuel system;
   issuing, based at least partially, on the prediction, at least one maintenance recommendation for the liquid fuel system; or
   performing, based at least partially on the prediction, operational adjustment of the liquid fuel system.
20. A system comprising:
   a combustor;
   a processor;
   a memory communicatively coupled to the processor, the memory storing instructions which when executed by the processor perform operations comprising:
      causing at least one water injection in the combustor, the at least one water injection being associated with at least one time;
      measuring at least one exhaust spread data associated with the at least one water injection;
      correlating the at least one exhaust spread data to at least one physical parameter associated with at least one of a nozzle and a valve of a liquid fuel system;
      storing the at least one exhaust spread data, the at least one physical parameter, and the at least one time to a database;
      providing stored data from the database to an analytical model, wherein the analytical model is operable to predict, based at least partially on the historical data, at least one future physical parameter associated with a future time;
      predicting, based at least partially on the analytical model and the stored data, changes in a productivity of the liquid fuel system;
      issuing, based at least partially on the prediction, at least one maintenance recommendation for the liquid fuel system; and
      performing, based at least partially on the prediction, operational adjustment of the liquid fuel system.

## Claims

1. A method (300) for predicting performance of a fuel system (100), the method comprising:
causing water injection in at least one combustor (16), the water injection being associated with at least one time;
measuring exhaust spread data associated with the water injection;
correlating the exhaust spread data to at least one physical parameter associated with a nozzle (12) or a valve of the fuel system (100);
storing the exhaust spread data, the at least one physical parameter, and the at least one time to a database; and
providing stored historical data from the database to a model, wherein the model is operable to:
provide a variation correlation of the at least one physical parameter to at least one of the following: a temperature, a velocity, or a purge duration of the fuel system (100); and
predict, based at least partially on the stored historical data, at least one future physical parameter associated with a future time;
predicting, based at least partially on the model and the stored historical data, changes in a productivity of the fuel system;
issuing, based at least partially on the prediction, at least one maintenance recommendation for the fuel system; and
performing, based at least partially on the prediction, an operational adjustment of the fuel system (100).

2. The method (300) of claim 1, wherein the at least one time is associated with commissioning of the fuel system (100).

3. The method (300) of claim 1 or 2, when the water injection is performed via at least one pilot valve of at least one pilot nozzle of the fuel system (100) or via at least one main valve or at least one main nozzle of the fuel system (100).

4. The method (300) of claim 1, 2 or 3, wherein the at least one physical parameter includes at least a flow rate of at least one nozzle (12) of the fuel system and a cross-section area of at least one valve of the fuel system.

5. The method (300) of any of claims 1 to 4, wherein the water injection is performed during a gas fuel operation or after a liquid fuel operation.

6. A system (400) for predicting performance of a liquid fuel system (100), the system comprising:
a processor (450);
a memory (410) communicatively coupled to the processor (450), the memory (450) storing instructions which when executed by the processor perform operations comprising:
causing at least one water injection in at least one combustor (16), the at least one water injection being associated with at least one time;
measuring at least one exhaust spread data associated with the at least one water injection;
correlating the at least one exhaust spread data with the at least one physical parameter associated with at least one of a nozzle (12) or a valve of the liquid fuel system (100);
storing the at least one exhaust spread data, the at least one physical parameter, and the at least one time to a database; and
providing stored data from the database to an analytical model, wherein the analytical model is operable to:
provide a variation correlation of the at least one physical parameter to at least one of the following: a temperature, a velocity, or a purge duration of the liquid fuel system (100); and
predict, based at least partially on the stored data, at least one future physical parameter associated with a future time;
predicting, based on the analytical model, changes in a productivity of the liquid fuel system (100);
issuing, based at least partially, on the prediction, at least one maintenance recommendation for the liquid fuel system (100); and
performing, based at least partially on the prediction, operational adjustment of the liquid fuel system (100).

7. The system (400) of claim 6, wherein:
the at least one time is associated with commissioning of the liquid fuel system (100); and
the at least one water injection is performed during a gas fuel operation or after a liquid fuel operation.

8. The system (400) of claim 6 or 7, wherein:
the at least one water injection is performed via at least one pilot valve or at least one pilot nozzle (12) of the liquid fuel system; or
the at least one water injection is performed via at least one main valve or at least one main nozzle of the liquid fuel system.

9. The system (400) of claim 6, 7 or 8, wherein the at least one physical parameter includes at least a flow rate of at least one nozzle (12) of the liquid fuel system (100) and a cross-section area of at least one valve of the liquid fuel system (100).

10. A system comprising:
a combustor (16);
a processor (450);
a memory (410) communicatively coupled to the processor (450), the memory (410) storing instructions which when executed by the processor perform operations comprising:
causing at least one water injection in the combustor (16), the at least one water injection being associated with at least one time;
measuring at least one exhaust spread data associated with the at least one water injection;
correlating the at least one exhaust spread data to the at least one physical parameter associated with at least one of a nozzle (12) and a valve of a liquid fuel system (100);
storing the at least one exhaust spread data, the at least one physical parameter, and the at least one time to a database;
providing stored data from the database to an analytical model, wherein the analytical model is operable to predict, based at least partially on the historical data, at least one future physical parameter associated with a future time;
predicting, based at least partially on the analytical model and the stored data, changes in a productivity of the liquid fuel system (100);
issuing, based at least partially on the prediction, at least one maintenance recommendation for the liquid fuel system (100); and
performing, based at least partially on the prediction, operational adjustment of the liquid fuel system (100).
